# EUROPEAN PATENT APPLICATION

(11) **EP 2 362 608 A1**
(43) Date of publication of application: **31.08.2011**
(21) Application number: 10160755.4
(22) Date of filing: 22.04.2010
(51) Int. Cl.: H04L 29/12, H04L 12/56, H04L 12/46

(54) **Data packet forwarding method and network device using such method in network address translation mode**

(30) Priority: 26.02.2010 TW 099105586
(71) Applicant: Connection Technology Systems Inc., Hsichih, Taipei Hsien (TW)
(72) Inventor: Fu, Chang-Wu, Taiwan, ROC, Taoyuan County 324 (TW)
(74) Representative: Rees, Simon John Lewis

(57) **Abstract**

A data packet forwarding method and a network device using such a method in a network address translation mode are provided. The network device includes a central processing unit and a switch chip. The switch chip includes at least a wide area network port and plural local area network ports. The multicast packet is directly forwarded from said wide area network port to corresponding local area network ports. Since the central processing unit is not included in the forwarding path of the multicast packet, the speed of forwarding the multicast packet is enhanced.

## Description

### FIELD OF THE INVENTION

The present invention relates to a data packet forwarding method and a network device using such a method, and more particularly to a data packet forwarding method and a network device using such a method in a network address translation (NAT) mode in order to increase the speed of forwarding a multicast packet.

### BACKGROUND OF THE INVENTION

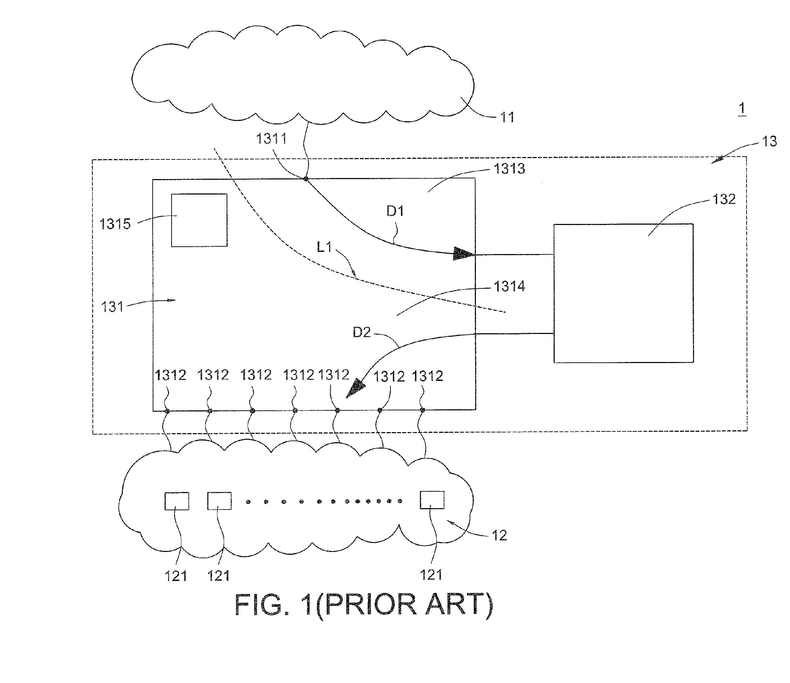

FIG. 1 is a schematic diagram illustrating the architecture of a network communication system according to the prior art. In the network communication system 1, data flows are forwarded from a wide area network (WAN) terminal 11 to plural computers 121 at a local area network (LAN) terminal 12 through a network device 13. Generally, the network device 13 comprises a switch chip 131 and a central processing unit (CPU) 132. One side of the switch chip 131 has a wide area network port 1311 connected to the wide area network terminal 11. The other side of the switch chip 131 has plural local area network ports 1312 connected to respective computers 121 of the local area network terminal 12.

In a case that the network device 13 is an IP sharer, the network device 13 has a network address translation (NAT) function. Due to the NAT function, the real IP address of the network device 13 at the wide area network terminal 11 could be shared to the computers 121 of the local area network terminal 12. As such, the plural computers 121 of the local area network terminal 12 have respective virtual IP addresses. For allowing the network device 13 to work in the NAT mode, the central processing unit 132 should set a task of segmenting virtual local area network to be implemented by the switch chip 131. After the task of segmenting virtual local area network is implemented, the switch chip 131 is segmented into a first virtual local area network (VLAN#1) terminal 1313 and a second virtual local area network (VLAN#2) terminal 1314. A logic segmentation line is indicated as the dotted line L1. Under this circumstance, the wide area network port 1311 and the plural local area network ports 1312 are defined to respectively belong to the VLAN#1 terminal 1313 and the VLAN#2 terminal 1314.

Generally, the data forwarded through the internet are packed into a packet, which is usually classified into a multicast packet and an unicast packet. The unicast packet is forwarded from a single source to a specified destination in a one-to-one connection manner. For example, the unicast packet is forwarded to a specified computer 121 of the local area network terminal 12 through the network device 13. The multicast packet is forwarded from a single source to many destinations in a one-to-many connection manner. For example, the multicast packet is forwarded to many specified computers 121 of the local area network terminal 12 through the network device 13. Moreover, the central processing unit 132 may record the data packet forwarding path in a forwarding table 1315. According to the forwarding table 1315, the data packet is forwarded to the destination address.

Nowadays, with increasing development of multimedia and network technologies, a large number of multimedia or video data are frequently forwarded through the network. Once the multimedia or video data are broadcasted through the network, the bandwidth of the network is readily occupied by the multimedia or video data, and thus the possibility of paralyzing the network is increased. For efficiently forwarding the multimedia or video data, the multimedia or video data are usually packed into a multicast packet, and the multicast packet is forwarded to many specified computers. On the other hand, for allowing the multicast packet to be forwarded to the local area network terminal 12 through the network device 13, an IGMP snooping process is implemented to listen to the IGMP network traffic. The IGMP snooping mechanism is configured on the layer 3 of the Internet Protocol for snooping the IGMP query packet, IGMP report packet and IGMP leave packet that are transmitted between the wide area network terminal 11 and the plural computers 121 of the local area network terminal 12. By the IGMP snooping mechanism, the relation between the IGMP multicast memberships could be realized. The data messages associated with the IGMP query packet, the IGMP report packet and the IGMP leave packet that are transmitted across the network device 13 are analyzed, calculated and processed by the central processing unit 132. As such, the forwarding path of the multicast packet will be acquired by the central processing unit 132 and then recorded in the forwarding table 1315.

Regardless of whether the data packet is a multicast packet or an unicast packet, the forwarding paths are identical when the data packet is forwarded from the wide area network terminal 11 to the local area network terminal 12 through the network device 13 in the NAT mode. That is, along the forwarding path, the data packet is firstly introduced into the VLAN#1 terminal 1313 through the wide area network terminal 11, then forwarded from the VLAN#1 terminal 1313 to the central processing unit 132 (in the data flow direction D1 as shown in FIG 1), then forwarded from the central processing unit 132 to the VLAN#2 terminal 1314 (in the data flow direction D2 as shown in FIG 1), and finally forwarded to a corresponding computer 121 through the local area network ports 1312. Regardless of whether the data packet is a multicast packet or an unicast packet, the path of forwarding the data packet from the local area network terminal 12 to the wide area network terminal 11 through the network device 13 is opposite to the above-mentioned path of forwarding the data packet from the wide area network terminal 11 to the local area network terminal 12 through the network device 13.

The conventional network system, however, still has some drawbacks. As known, the central processing unit 132 can process limited data flow. Since the forwarding path of any type data packet passes through the central processing unit 132, flow loading on the central processing unit 132 is very heavy. Under this circumstance, the forwarding action of the data packet is usually delayed. If the processing capability of the central processing unit 132 is insufficient to forward the data packet, the data packet may be discarded.

### SUMMARY OF THE INVENTION

The present invention relates to a data packet forwarding method and a network device using such a method in order to directly forward a multicast packet from a wide area network (WAN) terminal to a local area network (LAN) terminal.

In accordance with an aspect of the present invention, there is provided a data packet forwarding method for use in a network device with a network address translation (NAT) function. The network device includes a central processing unit (CPU), a switch chip and a forwarding table. The switch chip includes at least a wide area network port, plural local area network ports, a first connecting port and a second connecting port. The forwarding table stores information associated with a forwarding path of a data packet. The data packet forwarding method includes the following steps. Firstly, the switch chip is segmented into a first virtual local area network terminal and a second virtual local area network terminal with logic segmentation by the central processing unit. The wide area network port and the first connecting port are defined as members belonging to the first virtual local area network terminal. The second connecting port is defined as a member belonging to the second virtual local area network terminal. The plural local area network ports are defined as members belonging to the first virtual local area network terminal and the second virtual local area network terminal simultaneously. Then, the data packet from the wide area network terminal is received by the wide area network port. After a type of the data packet is judged, the data packet is forwarded according to the forwarding table. If the data packet is a multicast packet, the data packet is directly forwarded from the wide area network port to corresponding local area network ports.

In an embodiment, if the data packet is an unicast packet, the data packet is firstly forwarded from the wide area network port to the central processing unit through the first connecting port, and then the data packet is forwarded from the central processing unit to a corresponding local area network port through the second connecting port.

In an embodiment, if the data packet is a broadcast packet, the broadcast packet is firstly forwarded from the wide area network port to the central processing unit through the first connecting port, and then the central processing unit directly responds to the wide area network terminal according to the data packet.

In an embodiment, the data packet is an unicast packet, a multicast packet or a broadcast packet. The information associated with the forwarding path of the multicast packet is acquired by an IGMP snooping mechanism.

In an embodiment, a first virtual local area network tag is added to the data packet that is sent from the wide area network terminal and received by the wide area network port, so that the data packet is forwarded to the first connecting port or the plural local area network ports, which are defined as members belonging to the first virtual local area network terminal.

In an embodiment, a first virtual local area network tag is added to the data packet that is sent from the central processing unit and received by the first connecting port, so that the data packet is forwarded to the wide area network port or the plural local area network ports, which are defined as members belonging to the first virtual local area network terminal.

In an embodiment, a second virtual local area network tag is added to the data packet that is sent from the central processing unit and received by the second connecting port, so that the data packet is forwarded to the plural local area network ports plural local area network ports, which are defined as members belonging to the second virtual local area network terminal.

In an embodiment, a second virtual local area network tag is added to the data packet that is sent from the local area network terminal and received by the plural local area network ports, so that the data packet is forwarded to the second connecting port, which is defined as a member belonging to the second virtual local area network terminal.

In an embodiment, the network device is an IP sharer.

In accordance with another aspect of the present invention, there is provided a network device for forwarding a data packet from a wide area network terminal to a local area network terminal. The network device includes a switch chip, a forwarding table and a central processing unit (CPU). The switch chip includes at least a wide area network port, plural local area network ports, a first connecting port and a second connecting port. The wide area network port is connected to the wide area network terminal. The plural local area network ports are connected to the local area network terminal. The forwarding table is used for storing information associated with a forwarding path of the data packet. The central processing unit (CPU) is used for recording the information associated with the forwarding path of the data packet in the forwarding table, and segmenting the switch chip into a first virtual local area network terminal and a second virtual local area network terminal with logic segmentation according to a network address translation (NAT) function provided by the network device. The wide area network port and the first connecting port are defined as members belonging to the first virtual local area network terminal. The second connecting port is defined as a member belonging to the second virtual local area network terminal. The plural local area network ports are defined as members belonging to the first virtual local area network terminal and the second virtual local area network terminal simultaneously. If the data packet at the wide area network terminal is a multicast packet and the data packet is introduced into the network device through the wide area network port, the data packet is directly forwarded from the wide area network port to corresponding local area network ports by the network device according to the forwarding table.

In an embodiment, if the data packet at the wide area network terminal is an unicast packet and the data packet is introduced into the network device through the wide area network port, the data packet is firstly forwarded from the wide area network port to the central processing unit through the first connecting port by the network device, and then the data packet is forwarded from the central processing unit to corresponding a local area network port through the second connecting port by the network device according to the forwarding table.

In an embodiment, if the data packet at the wide area network terminal is a broadcast packet and the data packet is introduced into the network device through the wide area network port, the data packet is firstly forwarded from the wide area network port to the central processing unit through the first connecting port by the network device, and then the central processing unit directly responds to the wide area network terminal according to the data packet.

In an embodiment, the data packet is an unicast packet, a multicast packet or a broadcast packet, and the information associated with the forwarding path of the multicast packet is acquired by an IGMP snooping mechanism.

In an embodiment, by the switch chip, a first virtual local area network tag is added to the data packet that is sent from the wide area network terminal and received by the wide area network port, so that the data packet is forwarded to the first connecting port or the plural local area network ports, which are defined as members belonging to the first virtual local area network terminal.

In an embodiment, by the switch chip, a first virtual local area network tag is added to the data packet that is sent from the central processing unit and received by the first connecting port, so that the data packet is forwarded to the wide area network port or the plural local area network ports, which are defined as members belonging to the first virtual local area network terminal.

In an embodiment, by the switch chip, a second virtual local area network tag is added to the data packet that is sent from the central processing unit and received by the second connecting port, so that data packet is forwarded to the plural local area network ports plural local area network ports, which are defined as members belonging to the second virtual local area network terminal.

In an embodiment, by the switch chip, a second virtual local area network tag is added to the data packet that is sent from the local area network terminal and received by the plural local area network ports, so that the data packet is forwarded to the second connecting port, which is defined as a member belonging to the second virtual local area network terminal.

In an embodiment, the network device is an IP sharer.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic diagram illustrating the architecture of a network system according to the prior art;

FIG. 2 is a schematic diagram illustrating the architecture of a network system according to an embodiment of the present invention;

FIG. 3 is a virtual local area network allocation table schematically illustrating the relation between the wide area network port, the first connecting port, the second connecting port and the plural local area network ports of the network device as shown in FIG. 2; and

FIG. 4 schematically illustrates a flowchart of a data packet forwarding method according to an embodiment of the present invention.

### DETAILED DESCRIPTION OF THE PREFERRED EMBODIMENT

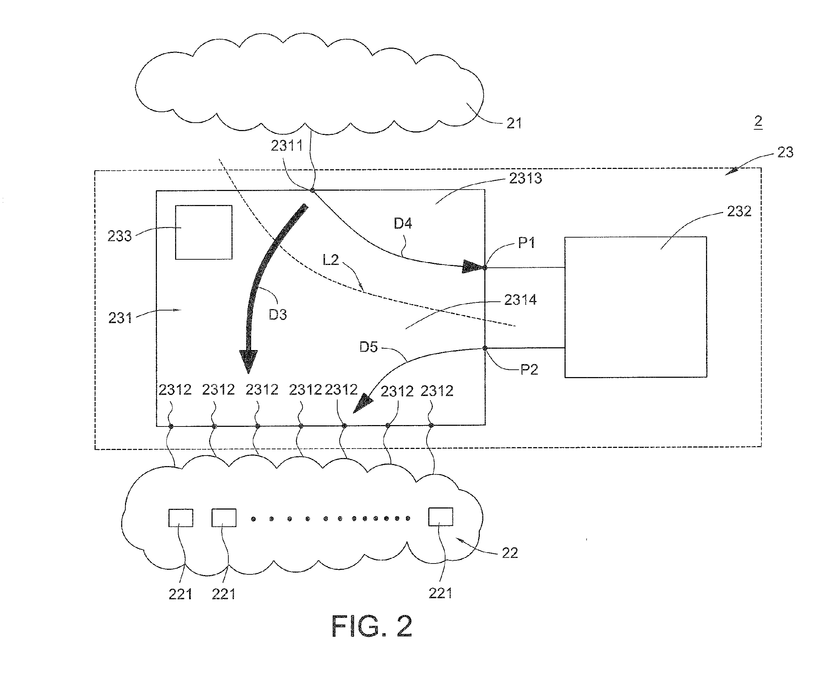

FIG. 2 is a schematic diagram illustrating the architecture of a network system according to an embodiment of the present invention. In the network communication system 2, one side of a network device 23 is connected to a wide area network (WAN) terminal 21, the other side of the network device 23 is connected to a local area network (LAN) terminal 22, and the local area network terminal 22 has plural computers 221. As such, a data packet could be forwarded from the wide area network terminal 21 to the plural computers 221 of the local area network terminal 22 through the network device 23.

The network device 23 comprises a switch chip 231, a forwarding table 233 and a central processing unit (CPU) 232. The switch chip 231 comprises a wide area network port 2311, plural local area network ports 2312, a first connecting port P1 and a second connecting port P2. The wide area network port 2311 is connected to the wide area network terminal 11. The plural local area network ports 2312 are connected to the local area network terminal 22. The first connecting port P1 and the second connecting port P2 are connected to the central processing unit 232. The data packet to be forwarded includes an unicast packet, a multicast packet or a broadcast packet. The central processing unit 232 may record the data packet forwarding path in a forwarding table 233. Any type of data packet could be forwarded from one of the plural local area network ports 2312 to another of the plural local area network ports 2312.

An example of the network device 23 is an IP sharer for providing a network address translation (NAT) function. Due to the NAT function, the real IP address of the network device 23 at the wide area network terminal 21 could be shared to the plural computers 221 of the local area network terminal 22. The sharing method creates plural virtual IP addresses according to the real IP address. As such, the plural computers 221 of the local area network terminal 22 have respective virtual IP addresses.

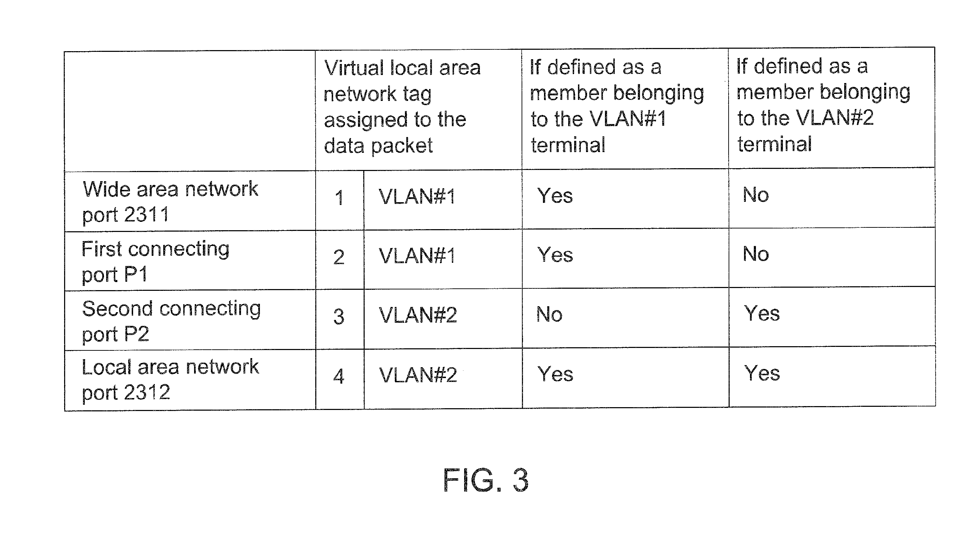

For allowing the network device 23 to work in the NAT mode, the central processing unit 232 will set a task of segmenting virtual local area network to be implemented by the switch chip 231. After the task of segmenting virtual local area network is implemented, the switch chip 231 is segmented into a first virtual local area network (VLAN#1) terminal 2313 and a second virtual local area network (VLAN#2) terminal 2314. A logic segmentation line is indicated as the dotted line L2. The relation between the wide area network port 2311, the first connecting port P1, the second connecting port P2 and the plural local area network ports 2312 will be illustrated with reference to FIG. 3.

FIG. 3 is a virtual local area network allocation table schematically illustrating the relation between the wide area network port, the first connecting port, the second connecting port and the plural local area network ports of the network device as shown in FIG. 2. The wide area network port 2311 and the first connecting port P1 are defined as members belonging to the first virtual local area network (VLAN#1) terminal 2313. The second connecting port P2 is defined as a member belonging to the second virtual local area network (VLAN#2) terminal 2314. The plural local area network ports 2312 are defined as members belonging to the VLAN#1 terminal 2313 and the VLAN#2 terminal 2314 simultaneously.

Please refer to the first row of the allocation table. By the switch chip 231, a first virtual local area network tag is added to the data packet that is sent from the wide area network terminal 21 and received by the wide area network port 2311. As such, the data packet could be forwarded to the first connecting port P1 or the plural local area network ports 2312, which are defined as members belonging to the VLAN#1 terminal 2313.

Please refer to the second row of the allocation table. By the switch chip 231, the first virtual local area network tag is also added to the data packet that is sent from the central processing unit 232 and received by the first connecting port P1. As such, the data packet could be forwarded to the wide area network port 2311 or the plural local area network ports 2312, which are defined as members belonging to the VLAN#1 terminal 2313.

Please refer to the third row of the allocation table. By the switch chip 231, a second virtual local area network tag is added to the data packet that is sent from the central processing unit 232 and received by the second connecting port P2. As such, the data packet could be forwarded to the plural local area network ports 2312, which are defined as members belonging to the VLAN#2 terminal 2314.

Please refer to the fourth row of the allocation table. By the switch chip 231, the second virtual local area network tag is added to the data packet that is sent from the local area network terminal 22 and received by the plural local area network ports 2312. As such, the data packet could be forwarded to the second connecting port P2, which is defined as a member belonging to the VLAN#2 terminal 2314.

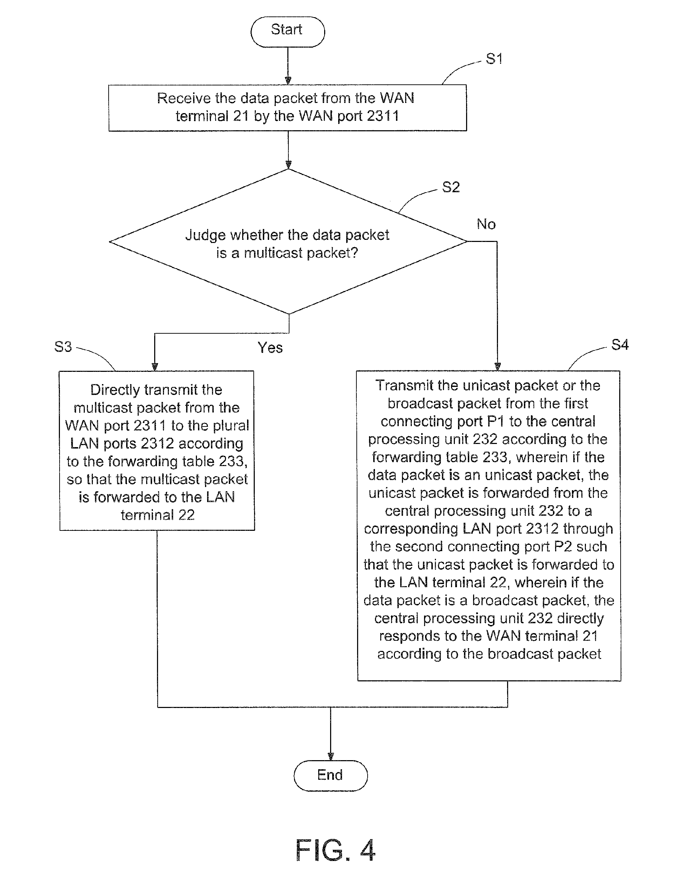

FIG. 4 schematically illustrates a flowchart of a data packet forwarding method according to an embodiment of the present invention. Hereinafter, a data packet forwarding method of forwarding the data packet from the wide area network terminal 21 to the local area network terminal 22 by the network device 23 will be illustrated with reference to the allocation table of FIG. 3 and the flowchart of FIG. 4.

In the step S1, the data packet from the wide area network terminal 21 is received by the wide area network port 2311.

In the step S2, the data packet forwarding method judges whether the data packet is a multicast packet. Once the data packet is the multicast packet, the step S3 is done. Whereas, once the data packet is not the multicast packet, the step S4 is done.

In the step S3, the multicast packet is directly forwarded from the wide area network port 2311 to the plural local area network ports 2312 (in the data flow direction D3 as shown in FIG. 2) according to the forwarding table 233, so that the multicast packet is forwarded to the local area network terminal 22.

In the step S4, the unicast packet or the broadcast packet is forwarded from the first connecting port P1 to the central processing unit 232 (in the data flow direction D4 as shown in FIG. 2) according to the forwarding table 233. In a case that the data packet is an unicast packet, the unicast packet is forwarded from the central processing unit 232 to a corresponding port of the plural local area network ports 2312 through the second connecting port P2 (in the data flow direction D5 as shown in FIG. 2), so that the unicast packet is forwarded to the local area network terminal 22. In a case that the data packet is a broadcast packet, the central processing unit 232 directly responds to the wide area network terminal 21 according to the broadcast packet.

Through an IGMP snooping mechanism, the forwarding path of the multicast packet is acquired. The internet group management protocol (IGMP) is a communications protocol used to manage the membership of Internet Protocol multicast groups. By the IGMP snooping mechanism, the relation between the IGMP multicast memberships could be realized. In addition, by means of IGMP, the router of the wide area network terminal 21 can judge whether multicast members are included in the network segment connected thereto. In accordance with the present invention, the computers 221 of the local area network terminal 22 to be joined in or left from the multicast group could be realized, and thus the multicast packet is forwarded to the computers of the multicast group.

According to the IGMP snooping mechanism, the router of the wide area network terminal 21 issues the IGMP query packet to the computers 221 of the local area network terminal 22 through the network device 23. After the IGMP query packet is received, the computers to be joined in the multicast group issue the IGMP report packet to the router of the wide area network terminal 21 through the network device 23, so that the computers join in the multicast group. Alternatively, the computers 221 of the local area network terminal 22 may actively issue the IGMP report packet to the router of the wide area network terminal 21 through the network device 23, so that the computers join in the multicast group. Moreover, the IGMP query packet and the IGMP report packet forwarded across the central processing unit 232 are analyzed. As such, the forwarding path of the multicast packet will be acquired by the central processing unit 232 and then recorded in the forwarding table 233. The multicast packet is not restricted to the IGMP communication protocol. Any other low-level information for acquiring the forwarding path of the multicast packet can be used while retaining the teachings of the invention.

From the above description, the data packet at the wide area network terminal 21 is not completely forwarded by the conventional forwarding path. On the other hand, the multicast packet is directly forwarded from the wide area network terminal 21 to corresponding computers 221 of the local area network terminal 22 according to the forwarding table 233. Since the central processing unit 232 is no longer included in the forwarding path of the multicast packet, the flow loading on the central processing unit 232 is largely reduced.

As previously described in the prior art, if the multicast packet is forwarded along the conventional forwarding path, the speed of forwarding the multicast packet is restricted by the processing capability of the central processing unit (e.g. about 70Mbps). Since the speed of forwarding the multicast packet is no longer restricted by the processing capability of the central processing unit according to the method of the present invention, the speed of forwarding the multicast packet can reach more than 1Gbps. In this situation, the performance of the network device is enhanced. For example, in a case that the network device 23 of the present invention is used to watch television through the network, the playback is much more smooth and fluent.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A data packet forwarding method for use in a network device having a network address translation (NAT) function, said network device comprising a central processing unit (CPU), a switch chip and a forwarding table, said switch chip comprising at least a wide area network port, plural local area network ports, a first connecting port and a second connecting port, said forwarding table storing information associated with a forwarding path of a data packet, said data packet forwarding method comprising steps of:
segmenting said switch chip into a first virtual local area network terminal and a second virtual local area network terminal with logic segmentation by said central processing unit, wherein said wide area network port and said first connecting port are defined as members belonging to said first virtual local area network terminal, said second connecting port is defined as a member belonging to said second virtual local area network terminal, and said plural local area network ports are defined as members belonging to said first virtual local area network terminal and said second virtual local area network terminal simultaneously;
receiving said data packet from said wide area network terminal by said wide area network port; and
judging a type of said data packet and forwarding said data packet according to said forwarding table, wherein if said data packet is a multicast packet, said data packet is directly forwarded from said wide area network port to corresponding local area network ports.

2. The data packet forwarding method according to claim 1 wherein if said data packet is an unicast packet, said data packet is firstly forwarded from said wide area network port to said central processing unit through said first connecting port, and then said data packet is forwarded from said central processing unit to a corresponding local area network port through said second connecting port.

3. The data packet forwarding method according to claim 1 wherein if said data packet is a broadcast packet, said broadcast packet is firstly forwarded from said wide area network port to said central processing unit through said first connecting port, and then said central processing unit directly responds to said wide area network terminal according to said data packet.

4. The data packet forwarding method according to claim 1 wherein said data packet is an unicast packet, a multicast packet or a broadcast packet, and said information associated with said forwarding path of said multicast packet is acquired by an IGMP snooping mechanism.

5. The data packet forwarding method according to claim 1 wherein a first virtual local area network tag is added to said data packet that is sent from said wide area network terminal and received by said wide area network port, so that said data packet is forwarded to said first connecting port or said plural local area network ports, which are defined as members belonging to said first virtual local area network terminal.

6. The data packet forwarding method according to claim 1 wherein a first virtual local area network tag is added to said data packet that is sent from said central processing unit and received by said first connecting port, so that said data packet is forwarded to said wide area network port or said plural local area network ports, which are defined as members belonging to said first virtual local area network terminal.

7. The data packet forwarding method according to claim 1 wherein a second virtual local area network tag is added to said data packet that is sent from said central processing unit and received by said second connecting port, so that said data packet is forwarded to said plural local area network ports plural local area network ports, which are defined as members belonging to said second virtual local area network terminal.

8. The data packet forwarding method according to claim 1 wherein a second virtual local area network tag is added to said data packet that is sent from said local area network terminal and received by said plural local area network ports, so that said data packet is forwarded to said second connecting port, which is defined as a member belonging to said second virtual local area network terminal.

9. The data packet forwarding method according to claim 1 wherein said network device is an IP sharer.

10. A network device for forwarding a data packet from a wide area network terminal to a local area network terminal, said network device comprising:
a switch chip comprising:
at least a wide area network port connected to said wide area network terminal;
plural local area network ports connected to said local area network terminal;
a first connecting port; and
a second connecting port;
a forwarding table for storing information associated with a forwarding path of said data packet; and
a central processing unit (CPU) for recording said information associated with said forwarding path of said data packet in said forwarding table, and segmenting said switch chip into a first virtual local area network terminal and a second virtual local area network terminal with logic segmentation according to a network address translation (NAT) function provided by said network device, wherein said wide area network port and said first connecting port are defined as members belonging to said first virtual local area network terminal, said second connecting port is defined as a member belonging to said second virtual local area network terminal, and said plural local area network ports are defined as members belonging to said first virtual local area network terminal and said second virtual local area network terminal simultaneously,
wherein if said data packet at said wide area network terminal is a multicast packet and said data packet is introduced into said network device through said wide area network port, said data packet is directly forwarded from said wide area network port to corresponding local area network ports by said network device according to said forwarding table.

11. The network device according to claim 10 wherein if said data packet at said wide area network terminal is an unicast packet and said data packet is introduced into said network device through said wide area network port, said data packet is firstly forwarded from said wide area network port to said central processing unit through said first connecting port by said network device, and then said data packet is forwarded from said central processing unit to a corresponding local area network port through said second connecting port by said network device according to said forwarding table.

12. The network device according to claim 10 wherein if said data packet at said wide area network terminal is a broadcast packet and said data packet is introduced into said network device through said wide area network port, said data packet is firstly forwarded from said wide area network port to said central processing unit through said first connecting port by said network device, and then said central processing unit directly responds to said wide area network terminal according to said data packet.

13. The network device according to claim 10 wherein said data packet is an unicast packet, a multicast packet or a broadcast packet, and said information associated with said forwarding path of said multicast packet is acquired by an IGMP snooping mechanism.

14. The network device according to claim 10 wherein by said switch chip, a first virtual local area network tag is added to said data packet that is sent from said wide area network terminal and received by said wide area network port, so that said data packet is forwarded to said first connecting port or said plural local area network ports, which are defined as members belonging to said first virtual local area network terminal.

15. The network device according to claim 10 wherein by said switch chip, a first virtual local area network tag is added to said data packet that is sent from said central processing unit and received by said first connecting port, so that said data packet is forwarded to said wide area network port or said plural local area network ports, which are defined as members belonging to said first virtual local area network terminal.

16. The network device according to claim 10 wherein by said switch chip, a second virtual local area network tag is added to said data packet that is sent from said central processing unit and received by said second connecting port, so that said data packet is forwarded to said plural local area network ports plural local area network ports, which are defined as members belonging to said second virtual local area network terminal.

17. The network device according to claim 10 wherein by said switch chip, a second virtual local area network tag is added to said data packet that is sent from said local area network terminal and received by said plural local area network ports, so that said data packet is forwarded to said second connecting port, which is defined as a member belonging to said second virtual local area network terminal.

18. The network device according to claim 10 wherein said network device is an IP sharer.
